# EUROPÄISCHE PATENTANMELDUNG

(11) **EP 0 996 049 A2**
(43) Veröffentlichungstag der Anmeldung: **26.04.2000**
(21) Anmeldenummer: 99120177.3
(22) Anmeldetag: 09.10.1999
(51) Int. Cl.: G05G 1/14

(54) **Betätigungselement, insbesondere Fahrpedal**

(30) Priorität: 19.10.1998 DE 19848088
(71) Anmelder: Mannesmann VDO Aktiengesellschaft, 60388 Frankfurt am Main (DE)
(72) Erfinder: Kohlen, Peter, 35510 Butzbach (DE)
(74) Vertreter: Klein, Thomas, Dipl.-Ing.

(57) **Zusammenfassung**

Ein Betätigungselement (10), das gegen die Kraft einer Rückstellfeder (18) verstellbar ist, verfügt über einen Sensor, der die Momentanstellung des Betätigungselements erfaßt. Bisher sind Drehwinkelsensoren wie zum Beispiel Potentiometer oder Hall-Sensoren üblich. Um die Teileanzahl zu reduzieren, wird vorgeschlagen, daß die an einem Ende mittelbar oder unmittelbar mit dem Betätigungselement (10, 14) verbundene Rückstellfeder (18) mit ihrem anderen Ende an einem in Abhängigkeit von der eingeleiteten Kraft elektrische Signale erzeugenden, ortsfest angebrachten Sensor (20) festgelegt ist. Damit braucht der Sensor (20) nicht mehr separat beispielsweise im Bereich der Lagerstelle (16) montiert zu werden. Das Betätigungselement (10) muß nicht mehr notwendigerweise spielarm geführt sein und der Sensor 20 erkennt unmittelbar einen Bruch der Rückstellfeder (18).

## Beschreibung

Die Erfindung befaßt sich mit einer Anordnung eines Betätigungselements, das gegen die Kraft einer Rückstellfeder verstellbar ist, mit einem Sensor, der die Momentanstellung des Betätigungselements erfaßt.

Die Erfassung der Stellung von Betätigungselementen ist notwendig, um die von dem Bediener gewünschten Sollwerte an eine Elektronik weiterzugeben. Derartige "drive-by-wire"-Anlagen ersetzen beispielsweise auch im Automobilbereich mehr und mehr die bisher üblichen Seilzugmechanismen mit einer mechanischen Betätigung des Regelgliedes.

Bei bisher üblichen Lösungen ist der Sensor als Drehwinkelsensor in Form eines Potentiometers oder eines Hall-Sensors ausgebildet. Bei schwenkbar gelagerten Betätigungselementen sitzen dabei die beweglichen Teile der Sensoren meist unmittelbar auf der Schwenkachse. Neben der Verschleißanfälligkeit von Potentiometern besteht insbesondere bei schwimmend gelagerten Fahrpedalen das Problem, daß radiale Verlagerungen der Schwenkachse zu fehlerhaften Sensorsignalen führen, da Radialbewegungen eines Potentiometerschleifers nicht von Umfangsbewegungen zu unterscheiden sind. Man kann sich zwar mit separaten Lagerungen des Potentiometers behelfen, dies treibt jedoch den baulichen Aufwand in die Höhe. Bei der Montage eines derartigen Betätigungselements ist es ohnehin notwendig, die beweglichen Teile einerseits über den Sensor und andererseits über die Rückstellfeder an einem ortsfesten Gehäuse festzulegen.

Die Aufgabe der Erfindung besteht darin, eine Sensoranordnung bei einem Betätigungselement zu schaffen, die die Anzahl der notwendigen Bauteile verringert und damit die Herstellkosten senkt.

Erfindungsgemäß wird die Aufgabe dadurch gelöst, daß die an einem Ende mittelbar oder unmittelbar mit dem Betätigungselement verbundene Rückstellfeder mit ihrem anderen Ende an einem in Abhängigkeit von der eingeleiteten Kraft elektrische Signale erzeugenden, ortsfest angeordneten Sensor festgelegt ist.

Die erfindungsgemäße Anordnung hat den Vorteil, daß keine separate Montage des Stellungssensors und des Rückstellelements mehr erforderlich ist, sondern sich letztere unmittelbar auf dem Sensor abstützt. Der Sensor erfaßt dabei nicht unmittelbar die Stellung des Betätigungselements, sondern die Rückstellkraft der Rückstellfeder, die aufgrund der mit zunehmendem Weg des Betätigungselements stetig ansteigenden Rückstellkraft einen eindeutigen Rückschluß auf die Stellung des Betätigungselements zuläßt. Die erfindungsgemäße Anordnung bietet ferner den Vorteil, daß sie sich ohne weiteres auch bei Betätigungselementen einsetzen läßt, die nicht mit einer starren Lagerung um eine Schwenkachse drehbar gelagert sind. Schwimmende Lagerungen sind ohne weiteres denkbar, ohne daß eine Verfälschung der Meßergebnisse des Sensors zu befürchten wäre, und auch Linearführungen des Betätigungselements lassen sich problemlos realisieren.

Die kraftempfindlichen Sensoren, wie zum Beispiel Sensoren nach dem Dehnungsmeßstreifenprinzip oder nach dem piezoelektrischen Prinzip arbeitende Druckaufnehmer, arbeiten im Gegensatz zu Potentiometern auch verschleißfrei und sorgen daher für eine zuverlässigere Erfassung der Stellung des Betätigungselements über die gesamte Betriebsdauer.

Ein weiterer großer Vorteil der erfindungsgemäßen Anordnung besteht darin, daß ein Bruch der Rückstellfeder durch den Sensor sofort erkannt wird und daher kein zusätzlicher Energiespeicher notwendig ist, der das Betätigungselement auch im Versagenstall der eigentlichen Rückstellfeder zurückstellt, um die Gefahr einer Fehlsteuerung bei "hängendem" Betätigungselement zu vermeiden.

Durch die Auswahl und Anordnung des als Rückstellfeder zum Einsatz kommenden Federelements kann die Pedalcharakteristik in gewünschter Weise angepaßt werden, wobei grundsätzlich alle bereits bekannten Anordnungen von Federelementen auch bei der erfindungsgemäßen Lösung einsetzbar sind. Auch zusätzliche Hystereseelemente, die mit Hilfe von Reibelementen für eine Hysterese der Betätigungskraft des Betätigungselements beim Aufbeziehungsweise Abregeln sorgen, können ohne weiteres in die erfindungsgemäße Anordnung integriert werden.

In bevorzugter Ausbildung der Anordnung ist vorgesehen, daß die Rückstellfeder als Druckfeder ausgebildet ist. Hierdurch ergibt sich ein besonders einfacher konstruktiver Aufbau im Vergleich zu grundsätzlich ebenfalls als Rückstellfedern bei einer erfindungsgemäßen Anordnung einsetzbaren Zugfedern oder Torsionsfedern.

In einer weiteren bevorzugten Ausführungsform der Erfindung ist vorgesehen, daß eine zweite Rückstellfeder parallel zur ersten Rückstellfeder angeordnet ist. Eine derartige Anordnung stellt im Falle eines Versagens einer Rückstellfeder sicher, daß der Sensor zwar den Bruch der einen Feder sofort erkennt, andererseits jedoch noch Notlaufeigenschaften zur Verfügung stehen, die bis zur Reparatur ein gegebenenfalls eingeschränktes Steuern ermöglichen. Eine besonders platzsparende und konstruktiv einfache Anordnung ergibt sich bei zwei ineinander gesteckten Schraubenfedern, welche die Rückstellfeder bilden.

Ein Anwendungsbeispiel der erfindungsgemäßen Anordnung ist das Fahrpedal eines Kraftfahrzeuges, wobei die Sensorsignale zur Ansteuerung der Motorsteuerelektronik dienen (Sollwertvorgabe).

Ein weiteres Anwendungsbeispiel der erfindungsgemäßen Anordnung ist eine Drosselklappe oder ein Drosselschieber zur Veränderung eines Leitungsquerschnittes für die Leistungssteuerung einer Brennkraftmaschine. Eine solche Drosselklappe ist beispielsweise in einem sogenannten Drosselklappenstutzen verschwenkbar angeordnet, wobei die Drosselklappe in Abhängigkeit von einer Leistungsanforderung (zum Beispiel Gasgeben eines Fahrers eines Fahrzeuges durch Niederdrücken eines Fahrpedales) von einem Stellantrieb verschwenkt wird. Dazu wird die Leistungsanforderung in ein elektrisches Signal umgesetzt, einer Motorsteuerelektronik zugeführt und von dieser dann der Stellantrieb angesteuert. Mit der erfindungsgemäßen Anordnung kann nun die eingestellte Position (Istwert) der Drosselklappe erfaßt und an die Motorsteuerelektronik gemeldet werden, die in Abhängigkeit eines Sollwert-/Istwert-Vergleiches den Stellantrieb solange ansteuert, bis die gewünschte Position der Drosselklappe erreicht ist.

Die erfindungsgemäße Anordnung kann gleichzeitig sowohl bei einem Fahrpedal als auch bei einer Drosselklappe (Drosselschieber) eingesetzt werden.

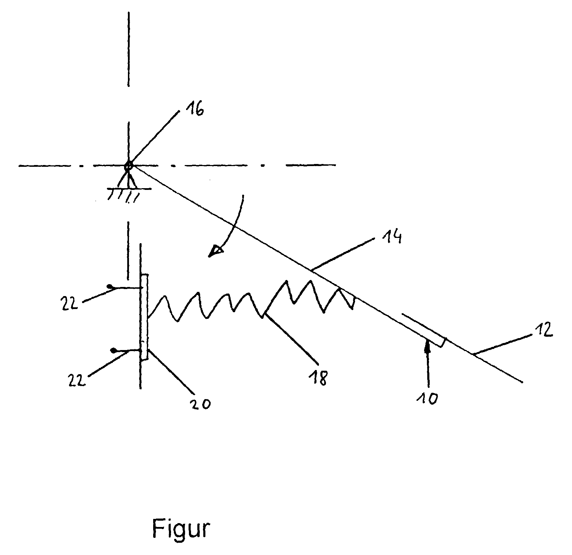

Nachfolgend wird anhand der beigefügten Zeichnung näher auf ein Ausführungsbeispiel der Erfindung eingegangen.

Die Abbildung zeigt eine schematische Skizze der Anordnung eines Fahrpedals 10, wobei die Anordnung üblicherweise in einem nicht dargestellten Gehäuse untergebracht ist. Das Fahrpedal 10 besteht aus einer Pedalfläche 12 und einem Pedalarm 14, der an einer Lagerstelle 16 in dem Gehäuse schwenkbar gelagert ist.

Die Schwenkbewegung des Pedals 10 um die Lagerstelle 16 erfolgt aus einer Leerlaufstellung gegen die Kraft einer Rückstellfeder 18. Die Rückstellfeder 18 kann in der Leerlaufstellung des Pedals 10 unter leichter Vorspannung stehen und den Pedalarm 14 gegen einen Anschlag (nicht gezeigt) vorbelasten. Die Rückstellfeder 18 ist auf einem gehäuseseitig befestigten Drucksensor 20 abgestützt, der beispielsweise nach dem Dehnungsmeßstreifenprinzip oder nach dem piezoelektrischen Prinzip arbeitet. Über elektrische Anschlüsse 22 werden die in Abhängigkeit von der Anlagekraft der Rückstellfeder 18 erzeugten elektrischen Signale an die Motorsteuerelektronik zur Steuerung der Motorparameter weitergegeben.

Die Betätigungscharakteristik des Fahrpedals ist durch die Wahl und Anordnung der Rückstellfeder 18 gezielt beeinflußbar. Reibelemente im Bereich der Lagerstelle 16 oder in Form separater Module (nicht gezeigt) können problemlos vorgesehen werden, um eine Hysterese der Betätigungskraft des Fahrpedals 10 zu erreichen, die der Autofahrer von den früher üblichen Seilzugmechanismen kennt und die Vorteile bezüglich Komfort und Feinfühligkeit bietet.

Die gesamte Anordnung mit dem Gehäuse kann als Modul ausgebildet sein, das in unterschiedlichen Kraftfahrzeugen Verwendung findet, wobei eine Anpassung der Betätigungscharakteristik des Fahrpedals 10 an den jeweiligen Fahrzeugtyp vorgenommen werden kann.

Da jede Fahrpedalstellung eine bestimmte Vorspannung der Rückstellfeder 18 bewirkt, kann jedem durch den Drucksensor 20 ermittelten Druckwert eindeutig die entsprechende Fahrpedalstellung zugeordnet werden. Dabei spielt es keine Rolle, ob die Rückstellfeder 18 eine lineare, progressive oder degressive Kennlinie besitzt. Ein Bruch der Rückstellfeder 18 wird sofort durch den Drucksensor 20 erkannt, so daß nicht die Gefahr einer fehlerhaften Ansteuerung der Motorsteuerelektronik besteht, wenn das Fahrpedal 10 bei gebrochener Rückstellfeder 18 in die Vollaststellung fällt. Um gewisse Notlaufeigenschaften sicherzustellen, die zumindest das problemlose Erreichen der nächstgelegenen Werkstatt ermöglichen, kann zusätzlich zu der Rückstellfeder 18 eine weitere, parallel geschaltete Feder (nicht gezeigt) angeordnet werden, so daß beim Bruch einer Feder immer noch eine ausreichende Rückstellkraft zur Verfügung steht, um das Fahrpedal 10 in die Leerlaufstellung zurückzustellen. Der Drucksensor 20 kann auch bei mehreren parallelen Rückstellfedern den Bruch einer Feder erkennen und beispielsweise einen Notlaufmodus der Motorsteuerelektronik aktivieren, der die Mobilität des Fahrzeugs sicherstellt. Eine besonders platzsparende Anordnung zweier Rückstellfedern erreicht man dadurch, daß zwei Schraubenfedern ineinander gesteckt zwischen dem Drucksensor 20 und dem Pedalarm 14 angeordnet werden.

Statt einer auf Druck belasteten Feder können auch Zugfeder- oder Torsionsfederanordnungen gewählt werden, wenn eine entsprechende Anpassung des Drucksensors 20 erfolgt.

### Bezugszeichenliste:

- 10: Betätigungselement (Pedal)
- 12: Pedalfläche
- 14: Pedalarm
- 16: Lagerstelle
- 18: Rückstellfeder
- 20: Drucksensor
- 22: elektrische Anschlüsse

## Patentansprüche

1. Anordnung eines Betätigungselements (10), das gegen die Kraft einer Rückstellfeder (18) verstellbar ist, mit einem Sensor (20), der die Momentanstellung des Betätigungselements (10) erfaßt, **dadurch gekennzeichnet**, daß die an einem Ende mittelbar oder unmittelbar mit dem Betätigungselement (10, 14) verbundene Rückstellfeder (18) mit ihrem anderen Ende an einem in Abhängigkeit von der eingeleiteten Kraft elektrische Signale erzeugenden, ortsfest angebrachten Sensor (20) festgelegt ist.

2. Anordnung nach Anspruch 1, **dadurch gekennzeichnet**, daß der Sensor (20) nach dem Dehnungsmeßstreifenprinzip arbeitet.

3. Anordnung nach Anspruch 1, **dadurch gekennzeichnet**, daß der Sensor (20) als nach dem piezoelektrischen Prinzip arbeitender Druckaufnehmer ausgebildet ist.

4. Anordnung nach einem der Ansprüche 1 bis 3, **dadurch gekennzeichnet**, daß die Rückstellfeder (18) als Druckfeder ausgebildet ist.

5. Anordnung nach einem der vorhergehenden Ansprüche, **dadurch gekennzeichnet**, daß eine zweite Rückstellfeder parallel zur ersten Rückstellfeder angeordnet ist.

6. Anordnung nach Anspruch 5, **dadurch gekennzeichnet**, daß zwei ineinander gesteckte Schraubenfedern die Rückstellfeder bilden.

7. Anordnung nach einem der vorhergehenden Ansprüche, **dadurch gekennzeichnet**, daß die Rückstellfeder (18) in der Ruhestellung des Betätigungselements (10) unter einer bestimmten Vorspannung steht.

8. Anordnung nach einem der vorhergehenden Ansprüche, **dadurch gekennzeichnet**, daß das Betätigungselement das Fahrpedal (10) eines Kraftfahrzeuges ist und die Sensorsignale zur Ansteuerung einer Motorsteuerelektronik dienen.

9. Anordnung nach einem der vorhergehenden Ansprüche, **dadurch gekennzeichnet**, daß das Betätigungselement eine Drosselklappe oder ein Drosselschieber zur Veränderung eines Leitungsquerschnittes für die Leistungssteuerung einer Brennkraftmaschine ist.
